(19)

Europäisches Patentamt
European Patent Office
Office européen des brevets

(11) **EP 4 414 737 A1**

(12) **EUROPEAN PATENT APPLICATION**

(43) Date of publication:
**14.08.2024  Bulletin 2024/33**

(21) Application number: **24152385.1**

(22) Date of filing: **17.01.2024**

(51) International Patent Classification (IPC):
**G01S 5/02** (2010.01)   **G01S 13/76** (2006.01)
**G01S 13/87** (2006.01)   **H04W 64/00** (2009.01)
**G01S 5/00** (2006.01)

(52) Cooperative Patent Classification (CPC):
**G01S 5/0268; G01S 13/765; G01S 13/876;**
**H04W 64/00;** G01S 5/0072

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.02.2023  FI 20235140**

(71) Applicant: **Nokia Technologies Oy
02610 Espoo (FI)**

(72) Inventors:
  • **KESHAVAMURTHY, Prajwal
    Munich (DE)**

  • **BARBU, Oana-Elena
    Aalborg (DK)**
  • **WILDSCHEK, Torsten
    Gloucester (GB)**
  • **KEATING, Ryan
    Chicago (US)**
  • **CHA, Hyun-Su
    Chicago (US)**
  • **KUCERA, Stepan
    Munich (DE)**

(74) Representative: **Nokia EPO representatives
Nokia Technologies Oy
Karakaari 7
02610 Espoo (FI)**

(54) **ASSISTED SL-RTT METHOD SWITCH**

(57)    Inter-alia, a method e.g. performed by an anchor user device is disclosed comprising:
- receiving a first target sidelink positioning reference signal;
- transmitting a first anchor sidelink positioning reference signal;
- performing a receiver-transmitter time difference measurement based on the first target sidelink positioning reference signal and the first anchor sidelink positioning reference signal;
- transmitting an indication of a suggestion to switch from a first sidelink round-trip time positioning method to a second round-trip time positioning method based on the receiver-transmitter time difference measurement

    Further, inter-alia a method performed by a target user device is disclosed as well as respective anchor and target user devices.

Fig.1

EP 4 414 737 A1

## Description

## FIELD OF DISCLOSURE

The following disclosure relates to the field of sidelink positioning, in particular switching between at least two sidelink positing methods.

## BACKGROUND

Sidelink positioning, e.g. in 5G new radio (NR), may be based on transmission of one or more sidelink positioning reference signals (SL-PRSs) by one or more anchor user equipments (UEs) to be received by a target UE (or a SL-PRS exchange between the anchor and one or more target UEs) to enable localization of the target UE(s) (e.g. via triangulation) within predetermined latency and accuracy requirements of the corresponding SL positioning session. SL positioning may enable many use cases, e.g. indoor positioning, public safety and vehicular applications as well as industrial and commercial applications, in particular in out-of-coverage scenarios.

## SUMMARY OF SOME EXEMPLARY EMBODIMENTS

Exemplary aspects and exemplary embodiments provided below may enable reduced signaling overhead and/or latency in sidelink round-trip time (SL-RTT) positioning and/or ensuring a required accuracy performance of sidelink positioning.

According to a first exemplary aspect, an anchor user device is disclosed comprising:

- means for receiving (e.g. from a target user device, e.g. over sidelink communication) a first target sidelink positioning reference signal;
- means for transmitting (e.g. to a target user device, e.g. over sidelink communication) a first anchor sidelink positioning reference signal (e.g. in response to the received first target sidelink positioning reference signal);
- means for performing a receiver-transmitter time difference measurement based on the first target sidelink positioning reference signal and the (e.g. scheduled or transmitted) first anchor sidelink positioning reference signal;
- means for transmitting (e.g. to the target user device, e.g. over sidelink communication) an indication of a suggestion to switch from a first sidelink round-trip time positioning method to a second round-trip time positioning method based on the receiver-transmitter time difference measurement

The anchor user device may for instance be or comprise a mobile entity (e.g., a mobile telecommunication device or a mobile phone or a user equipment or a terminal device). The anchor user device may e.g. be configured to support at least two round-trip time positioning methods.

According to a second exemplary aspect, a target user device (e.g. supporting at least two round-trip time positioning methods) is disclosed comprising:

- means for transmitting (e.g. to an anchor user device, e.g. over sidelink communication) a first target sidelink positioning reference signal;
- means for receiving (e.g. from the anchor user device, e.g. over sidelink communication) a first anchor sidelink positioning reference signal;
- means for receiving (e.g from the anchor user device, e.g. over sidelink communication) an indication of a suggestion to switch from a first sidelink round-trip time positioning method to a second round-trip time positioning method based on a receiver-transmitter time difference measurement;
- means for performing, based on (e.g. in response to) the received indication of the suggestion to switch, positioning of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method.

The target user device may for instance be or comprise a mobile entity (e.g., a mobile telecommunication device or a mobile phone or a user equipment or a terminal device). The target user device may e.g. be configured for supporting at least two round-trip time positioning methods.

The anchor and/or target user device according to any aspect may comprise at least one processor; and at least one memory storing instructions that, when executed by the at least one processor, cause the anchor and/or target user device at least to perform the specified steps. For instance, the target user device according to the second exemplary aspect may be a target user device comprising at least one processor; and at least one memory storing instructions that, when executed by the at least one processor, cause the anchor and/or target user device at least to perform:

- transmitting a first target sidelink positioning reference signal;
- receiving a first anchor sidelink positioning reference signal;
- receiving an indication of a suggestion to switch from a first sidelink round-trip time positioning method to a second round-trip time positioning method based on a receiver-transmitter time difference measurement;
- performing, based on the received indication of the suggestion to switch, positioning of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method;

and/or the anchor user device according to the first exemplary aspect may be an anchor user device comprising at least one processor; and at least one memory storing instructions that, when executed by the at least one processor, cause the anchor and/or target user device at least to perform:

- receiving a first target sidelink positioning reference signal;
- transmitting a first anchor sidelink positioning reference signal;
- performing a receiver-transmitter time difference measurement based on the first target sidelink positioning reference signal and the first anchor sidelink positioning reference signal;
- transmitting an indication of a suggestion to switch from a first sidelink round-trip time positioning method to a second round-trip time positioning method based on the receiver-transmitter time difference measurement

The means of the anchor and/or target user device can be implemented in hardware and/or software. They may comprise for instance at least one processor for executing processor instructions for performing the required functions, at least one memory storing the instructions, or both. Alternatively, they could comprise for instance circuitry that is designed or configured to implement the required functions, for instance implemented in a chipset or a chip, like an integrated circuit In general, the means may comprise for instance one or more processing means or processors.

As used in this application, the term "circuitry" may refer to one or more or all of the following:

(a) hardware-only circuit implementations (such as implementations in e.g. analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to a third exemplary aspect, a first method (e.g. performed by an anchor user device as disclosed above) is disclosed, the method comprising:

- receiving (e.g. from a target user device, e.g. over sidelink communication) a first target sidelink positioning reference signal;
- transmitting (e.g. to a target user device, e.g. over sidelink communication) a first anchor sidelink positioning reference signal (e.g. in response to the received first target sidelink positioning reference signal);
- performing a receiver-transmitter time difference measurement based on the first target sidelink positioning reference signal and the first anchor sidelink positioning reference signal;
- transmitting (e.g. to the target user device, e.g. over sidelink communication) an indication of a suggestion to switch from a first sidelink round-trip time positioning method to a second round-trip time positioning method based on the receiver-transmitter time difference measurement

The first method may comprise the steps the anchor user device of the first exemplary aspect is configured to perform or for which the anchor user device has/comprises means for.

According to a fourth exemplary aspect, a second method (e.g. performed by a target user device) is disclosed, the method comprising:

- transmitting (e.g. to an anchor user device, e.g. over sidelink communication) a first target sidelink positioning reference signal;
- receiving (e.g. from the anchor user device, e.g. over sidelink communication) a first anchor sidelink positioning reference signal;
- receiving (e.g. from the anchor user device, e.g. over sidelink communication) an indication of a suggestion to switch from a first sidelink round-trip time positioning method to a second round-trip time positioning method based on a receiver-transmitter time difference measurement;

- performing, based on (e.g. in response to) the received indication of the suggestion to switch, positioning of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method, optionally comprising determining (e.g. estimating), based on (e.g. in response to) the received indication of the suggestion to switch, a position of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method.

The second method may comprise the steps the target user device of the second exemplary aspect is configured to perform or for which the target user device has/comprises means for. The method according to any aspect may for instance be performed and/or controlled by an apparatus, for instance a mobile entity (e.g., a mobile telecommunication device or a mobile phone or a user equipment or a terminal device).

Alternatively, the method according to any aspect may be performed and/or controlled by more than one apparatus, for instance a system comprising a target user device and at least one (e.g. at least three) anchor user device(s).

According to a fifth exemplary aspect, a computer program is disclosed, the computer program when executed by a processor causing an apparatus to perform and/or control the actions and/or steps of the method according to at least one of the third and fourth exemplary aspect

According to a sixth exemplary aspect, a system is disclosed, e.g. the system comprising at least one target user equipment and at least one anchor user equipment together performing the method according to at least one of the third and fourth exemplary aspect, in particular by using sidelink (e.g. communication) for transmitting and/or receiving. For instance, a system comprising at least a target user equipment comprising:

- means for transmitting a first target sidelink positioning reference signal;
- means for receiving a first anchor sidelink positioning reference signal;
- means for receiving an indication of a suggestion to switch from a first sidelink round-trip time positioning method to a second round-trip time positioning method based on a receiver-transmitter time difference measurement;

- means for determining, based on the received indication of the suggestion to switch, a position of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method;
- the system further comprising an anchor user equipment comprising means for:
- means for receiving the first target sidelink positioning reference signal;
- means for transmitting the first anchor sidelink positioning reference signal;
- means for performing a receiver-transmitter time difference measurement based on the first target sidelink positioning reference signal and the first anchor sidelink positioning reference signal;
- means for transmitting the indication of a suggestion to switch from the first sidelink round-trip time positioning method to the second round-trip time positioning method based on the receiver-transmitter time difference measurement

The system may comprise e.g. the target and/or anchor user device of any exemplary aspect as disclosed herewith.

According to a further exemplary aspect, an apparatus, e.g. a user device, is disclosed, configured to perform and/or control or comprising respective means for performing and/or controlling the method according to any exemplary aspect According to a further exemplary aspect, an apparatus, e.g. an anchor or target user device, is disclosed comprising at least one processor; and at least one memory storing instructions that, when executed by the at least one processor, cause the apparatus at least to perform the method according to any exemplary aspect

According to a further exemplary aspect, a computer program product is disclosed, the computer program product when executed by a processor of an apparatus causing said apparatus to perform a method according to at least one of the third and fourth exemplary aspect.

According to a further exemplary aspect, a computer readable storage medium is disclosed, the computer readable storage medium comprising a computer program product or a computer program according to the fifth exemplary aspect

Any disclosure herein relating to any exemplary aspect is to be understood to be equally disclosed with respect to any subject-matter according to the respective exemplary aspect, e.g. relating to an apparatus, a method, a computer program, and a computer-readable medium. Thus, for instance, the disclosure of a method step shall also be considered as a disclosure of means for performing and/or caused to perform the respective method step. Likewise, the disclosure of means for performing and/or causing to perform a method step shall also be considered as a disclosure of the method step itself. The same holds for any passage describing at least one processor; and at least one memory including instructions; the at least one memory and the instructions configured to, with the at least one processor, cause an apparatus at least to perform a step.

According to an exemplary embodiment of the first exemplary aspect, the anchor user device further comprising:

- means for determining whether to switch from the first sidelink round-trip time positioning method to the second round-trip time positioning method based on the (e.g. performed) receiver-transmitter time difference measurement
- wherein the indication of the suggestion to switch at least indicates a suggestion whether to switch from the first sidelink round-trip time positioning method to the second round-trip time positioning method based on the determining whether to switch from the first sidelink round-trip time positioning method to the second round-trip time positioning method.

The determining whether to switch may comprise one or more (e.g. at least one) of the following:
For instance, the determining whether to switch may comprise checking whether a receiver-transmitter measurement complies with a pre-defined threshold. For instance, the checking may comprise whether the receiver-transmitter measurement fulfils a criterion with respect to a pre-define threshold (e.g. uncertainty threshold for the receiver transmitter measurement).

For instance, the determining whether to switch from a first sidelink round-trip time positioning method to a second round-trip time positioning method may comprise determining whether an uncertainty exceeds an uncertainty threshold (e.g. is above or below an uncertainty threshold). Upon determining that an uncertainty exceeds (e.g. is above or below) the uncertainty threshold, the indication of the suggestion to switch may indicate a suggested switch from the first sidelink round-trip time positioning method to the second round-trip time positioning method (e.g. by indicating that a target user device should change from the first sidelink round-trip time positioning method to the second round-trip time positioning method).

For instance, the determining whether to switch from a first sidelink round-trip time positioning method to a second round-trip time positioning method may comprise determining whether a clock error characteristic is above or below a clock error threshold. Upon determining that the clock error characteristic is above or below the clock error threshold, the indication may indicate a suggested switch from the first sidelink round-trip time positioning method to the second round-trip time positioning method (e.g. by indicating that a target user device should change from the first sidelink round-trip time positioning method to the second round-trip time positioning method).

For instance, the determining whether to switch from a first sidelink round-trip time positioning method to a second round-trip time positioning method may comprise determining whether a receiver-transmitter time difference is above or below a time duration threshold. Upon determining that the receiver-transmitter time difference is above or below the time duration threshold, the indication may indicate a suggested switch from the first sidelink round-trip time positioning method to the second round-trip time positioning method (e.g. by indicating that a target user device should change from the first sidelink round-trip time positioning method to the second round-trip time positioning method).

For instance, the determining whether to switch from a first sidelink round-trip time positioning method to a second round-trip time positioning method is at least partly based on a history of accuracy achieved in past single-sided sidelink round-trip time positioning sessions (e.g. from a history of accuracy based on a record of past single sidelink round-trip time positioning sessions, e.g. stored or provided by an anchor or a target user device or by a further device such as a server or server cloud).

According to another exemplary embodiment of the first exemplary aspect, the anchor user device further comprises:

- means for determining an uncertainty (e.g. an (expected) clock drift, an expected measurement uncertainty) of the performed first receiver-transmitter time difference measurement. For instance, an expected (i.e. anticipated or predited) clock drift may be utilized in case the (exact) clock drift is not known, e.g. by the anchor user device. An expected clock drift may e.g. be determined based on clock drift characteristics and/or clock error characteristics that are known to or retrieved/retrievable (e.g. from the target user device) by the anchor user device. Clock drift characteristics may e.g. be or comprise a probability of a clock drift (of e.g. the target user device) being above a certain threshold.

The determining whether to switch may be based on the uncertainty (e.g. an indication of the uncertainty is not necessarily transmitted e.g. to the target user device). An indication of the uncertainty may e.g. not be transmitted. Upon determining the uncertainty, in an exemplary case, the anchor user device may send/transmit (e.g. just) an indication of a suggestion to switch (without uncertainty). In another exemplary case, the anchor user device may also indicate uncertainty.

According to another exemplary embodiment of the first exemplary aspect, the anchor user device further comprises:

- means for transmitting (e.g. to the target user device) an indication of the determined uncertainty (e.g. as a further basis for determining whether to switch).

The uncertainty may be determined e.g. based on at least one of: clock drift characteristics of at least one of the target or the anchor user device, (e.g. scheduled or performed) receiver-transmitter time difference measurement(s), further receiver-transmitter time difference measurement, or information on a synchronization reference source change.

Determining the uncertainty may e.g. comprise calculating a clock error between the target and anchor user device, e.g. based on the clock error characteristics of the target and anchor user device (which may be provided by the target or anchor user device).

The uncertainty may indicate an error range (e.g. that an uncertainty is in a certain range, e.g. within a certain order of magnitude).

For instance, the determining whether to switch from the first sidelink round-trip time positioning method to the second round-trip time positioning method may be based on the (determined) uncertainty.

According to a further exemplary embodiment of the first exemplary aspect, the anchor user device further comprises at least one of:

- means for determining a (absolute) position of the anchor user device; or
- means for transmitting (e.g. to a target user device) the location of the anchor user device.

According to a further exemplary embodiment of the first exemplary aspect, the anchor user device further comprises:

- means for receiving (e.g. from a target user device) a request for the indication of the suggestion to switch from the first sidelink round-trip time positioning method to the second round-trip time positioning method based on the performed first receiver-transmitter time difference measurement;
- wherein the transmitting (e.g. to the target user device) the indication of the suggestion to switch from the first sidelink round-trip time positioning method to the second round-trip time positioning method is performed based on (e.g. in response to) the received request.

The request for the indication may comprise at least one of:

- an indication of the active sidelink round-trip time positioning method (e.g. in case the indication of the suggestion to switch indicates no switch (e.g. indicates that the target user device should not perform a switch or only indicates that a switch is possible), the active sidelink round-trip time positioning method is to be performed;
- a sidelink positioning requirement (e.g. a requirement of a minimum sidelink positioning accuracy or an uncertainty threshold of the receiver-transmitter time difference measurement);
- a clock error characteristic (e.g. a characteristic that a clock is behind or ahead by a certain amount of time). A clock error characteristic may be a known or pre-configured clock error characteristic which may be retrieved from a database or a characteristic of a clock error determined based on a history of the accuracy level achieved in the past SL RTT positioning sessions and/or on the synchronization sources of an anchor and/or target user device. A clock error characteristic may be a function of e.g. a clock error between two user devices (e.g. target and anchor user device) and a receiver-transmitter time difference (e.g. a response time e.g. taken by the responding user device). A clock error characteristic may be a clock error characteristic of the target user device (e.g. given in ppm); or
- an identification of a synchronization source of the target user device.

According to a further exemplary embodiment of the first exemplary aspect, the anchor user device further comprises:

- means for transmitting (e.g. to the target user device, an LMF or another user device) the receiver-transmitter time difference measurement for determining (e.g. by the target user device, an LMF or another user device) whether to switch from the first sidelink round-trip time positioning method to the second round-trip time positioning method.

According to a further exemplary embodiment of the first exemplary aspect, wherein the first sidelink round-trip time positioning method is a single sided round-trip time positioning method based on the first receiver-transmitter time difference measurement and the second round-trip time positioning method a double-sided round-trip time positioning method based on the first receiver-transmitter time difference measurement and a second receiver-transmitter time difference measurement

For instance, the indication of the suggestion to switch may be or may comprise an indication whether (e.g. or not) to trigger a second receiver-transmitter time difference measurement (e.g. at target user device based on first receiver-transmitter time difference measurement), e.g. in case the switch is a switch from a single sided round-trip time positioning method to double-sided round-trip time positioning method.

The indication of the suggestion to switch may comprise at least one of: an indication whether (e.g. or not) a second receiver-transmitter time measurement should be performed at the target user device (e.g. a one bit indication), an indication of an uncertainty, an indication of a clock error or clock error characteristic of the anchor user device, or an indication on whether (e.g. or not) the synchronization source changed during the performing the receiver-transmitter time difference measurement

The indication of the suggestion to switch or the indication whether the second receiver-transmitter time measurement should be performed may be an implicit or an explicit indication, in particular a one-bit indication. An implicit indication may be performed by the anchor user device e.g. by transmitting (e.g. to the target user device) a second anchor sidelink positioning reference signal (which may e.g. trigger a switch to double-sided RTT at the user device), to name but one non-limiting example.

According to a further exemplary embodiment of the first exemplary aspect, the indication of the suggestion to switch comprises a request for a second anchor sidelink positioning reference signal. According to an exemplary embodiment of the target user device according to the second exemplary aspect, the target user device may further comprise means for transmitting a second anchor sidelink positioning reference signal, e.g. in response to a received request for the second anchor sidelink positioning reference signal.

According to an exemplary embodiment of the target user device according to the second exemplary aspect, optionally the target user device may further comprise at least one of:

- means for determining whether to switch from the first sidelink round-trip time positioning method to the second round-trip time positioning method based on the indication of the suggestion to switch; and upon determining to switch, switching to the second round-trip time positioning method;
- means for receiving (e.g. from an anchor user device) the receiver-transmitter time difference measurement;
- means for transmitting a request (e.g. to an LMF or another user device) for determining (e.g. by the LMF or another user device) whether to switch from the first sidelink round-trip time positioning method to the second round-trip time positioning method based on the indication of the suggestion to switch; and upon determining to switch, switching to the second round-trip time positioning method; and e.g. means for receiving the result of the determining whether to switch;
- means for transmitting (e.g. to an LMF or another user device) the receiver-transmitter time difference measurement;
- means for receiving further sidelink round trip time positioning measurements (e.g. from the anchor user device), wherein determining the position may be further based on the (e.g. received) further sidelink round trip time positioning measurements; or
- means for receiving (e.g. from the anchor user device) the location of the anchor user device, wherein in particular determining the position of the target user device is further based on the location of the anchor user device.

According to a further exemplary embodiment of the target user device according to the second exemplary aspect, the means for performing positioning of the target user device comprise means for determining (e.g. estimating), based on (e.g. in response to) the received indication of the suggestion to switch, a position of the target user device using the first round-trip time positioning method or the second round-trip time positioning method (the first round-trip time positioning method or the second round-trip time positioning method being used based on determining whether to switch from the first sidelink round-trip time positioning method to the second round-trip time positioning method). Alternatively or additionally, the means for performing positioning may comprise means for instructing another entity (e.g. a location server, an LMF, or another user device) to determine the position of the target user device using the first round-trip time positioning method or the second round-trip time positioning method. For example, alternatively or additionally the target user device comprises means for providing (e.g. transmiting) measurements on SL PRS timings (e.g. the receive timing of the first target sidelink positioning reference signal and the transmit timing of the first anchor sidelink positioning reference signal) and/or an receiver-transmitter time difference measurements to another entity, such as to a location server (e.g. an LMF) or a user device acting in the role of LMF, enabling said other entity to determine the position of the target user device using the first round-trip time positioning method or the second round-trip time positioning method. The other entity may then determine the position of the target user device. The target user device may receive an indication of its position from the other entity, e.g. via means for receiving such an indication. For instance, the reception or receive timing of the first target sidelink positioning reference signal may be determined based on the reception of the first target sidelink positioning reference signal by the anchor user device (e.g. anchor user device according to the first exemplar aspect). The transmit timing of the first anchor sidelink positiong reference signal may be determined based on, for example, scheduled radio resources (e.g. SL PRS resources) for transmitting the first anchor sidelink positiong reference signal. For instance, the anchor user device may determine when the first anchor sidelink positiong reference signal is to be or will be transmitted. Thus, the anchor user device may determine the receiver-transmitter time difference measurement e.g. for the RTT measurement

According to a further exemplary embodiment of the second exemplary aspect, the target user device further comprises:

- means for determining whether (e.g. or not) to switch from the first sidelink round-trip time positioning method to the second round-trip time positioning method as suggested by the received indication; and/or
- means for triggering (e.g. an LMF or other user equipment) a determining whether to switch from the first sidelink round-trip time positioning method to the second round-trip time positioning method as suggested by the received indication.

According to a further exemplary embodiment of the second exemplary aspect, the target user device further comprises:

- means for switching to the second round-trip time positioning method used in case the determining whether to switch or the triggering of the determining whether to switch yields to the result to switch from the first sidelink round-trip time positioning method to the second round-trip time positioning method;
- means for transmitting a second target sidelink positioning reference signal; and/or
- means for performing a second receiver-transmitter time difference measurement based on the received first anchor sidelink positioning reference signal and the (e.g. scheduled or transmitted) second target sidelink positioning reference signal.

According to a further exemplary embodiment of the second exemplary aspect, the first sidelink round-trip time positioning method is a single sided round-trip time positioning method and the second round-trip time positioning method a double-sided round-trip time positioning method. In this case, for instance, the indication of the suggestion to switch may be or may comprise an indication whether (e.g. or not) to trigger a second receiver-transmitter time difference measurement. The target user device may further comprise:

- means for triggering a second receiver-transmitter time difference measurement (e.g. by transmitting a second target sidelink positioning reference signal, and/or performing a second receiver-transmitter time difference measurement based on the received first anchor and (e.g. scheduled or transmitted) second target sidelink positioning reference signal).

According to a further exemplary embodiment of the second exemplary aspect, the target user device further comprises:

- means for receiving (e.g. from the anchor user device) an indication of an uncertainty of the performed first receiver-transmitter time difference measurement; wherein the determining whether to switch from the first sidelink round-trip time positioning method to the second round-trip time positioning method is further based on the received indication of the uncertainty, in particular determining whether to switch from the first sidelink round-trip time positioning method to the second round-trip time positioning method may be further based on whether the uncertainty above a certain measurement uncertainty threshold.

According to a further exemplary embodiment of the second exemplary aspect, the indication of the suggestion to switch comprises an indication of a clock error of the anchor user device, wherein the determining whether to switch from the first sidelink round-trip time positioning method to the second round-trip time positioning method may be further based on the indication of the clock error. In particular determining whether to switch from the first sidelink round-trip time positioning method to the second round-trip time positioning method may be further based on whether the clock error is above a certain threshold.

According to a further exemplary embodiment of the second exemplary aspect, the indication of the suggestion to switch comprises an indication on whether or not the synchronization source changed during (the) performing the receiver-transmitter time difference measurement, wherein the determining whether to switch from the first sidelink round-trip time positioning method to the second round-trip time positioning method is further based on the indication on whether or not the synchronization source changed during the performing the receiver-transmitter time difference measurement ( e.g. by adding a certain additional error offset to the determined uncertainty, the certain additional error offset may e.g. be based on the change in the synchronization source e.g. when the clock characteristics of the respective synchronization sources are known).

In the following, at least one of exemplary features or exemplary embodiments of all aspects will be described in further detail.

According to all disclosed exemplary aspects, at least one of the following features may apply:

- a target user device may be understood as a user device to be positioned (by using a sidelink positioning method, e.g. using a PC5 interface);
- an anchor user device may be understood as a user device supporting positioning of a target user device, e.g., by transmitting and/or receiving reference signals for positioning (i.e. positioning reference signals), providing positioning-related information, etc., e.g. over a sidelink interface (e.g. PC5 interface);
- a sidelink positioning reference signal (SL PRS) may be understood as a reference signal transmitted over sidelink for positioning (purposes, e.g. for positioning a target user device);
- sidelink positioning may be understood as positioning a (target) sidelink positioning reference signals, which may e.g. be transmitted via a PC5 interface, to obtain absolute position, relative position, and/or ranging information;

- sidelink (SL) may enable direct communication between two mobile entities (e.g. user devices);
- ranging may be understood as a determination of the distance and/or the direction between a user device and another entity, e.g., anchor user device;
- a SL PRS (pre-)configuration may be understood as comprising (pre-)configured parameters of SL PRS such as time-frequency re-sources (other parameters are not precluded) e.g. including its bandwidth and/or periodicity;
- an indication of a suggestion to switch may, for example, indicate whether a switch from the first sidelink round-trip time positioning method to the second round-trip time positioning method is suggested to be performed (or not) and/or that a capability to switch exists (e.g. so that the target user device may determine whether to switch without receiving a particular suggestion, e.g. in case an anchor user device does not determine whether to switch);
- an indication of a suggestion to switch may, for example, be a message to the target user device to switch to single/double-sided RTT or it may be or comprise a request for an additional (e.g. second anchor) sidelink positioning reference signal, which may e.g. enable double-sided RTT;
- a switch from a first SL RTT measurement to a second SL RTT may be understood as changing from the procedure according to a first SL RTT measurement to the procedure according to a second SL RTT, e.g. by performing or omitting additional measurements (e.g. receiver-transmitter time difference measurements);
- a clock error (between two user devices) may be understood as the difference in (absolute) time of e.g. two user devices;
- a receiver-transmitter time difference measurement may be or comprise a measurement of the time between a received and a transmitted positioning reference signal, e.g. considering the receive and transmit timing of SL PRS;
- an uncertainty may be e.g. an expected clock drift, an expected measurement uncertainty. It may be e.g. based on at least one of: clock drift characteristics of at least one of the target or the anchor user device, performed first receiver-transmitter time difference measurement, further receiver-transmitter time difference measurement or an information of a synchronization reference source change during the performed first receiver-transmitter time difference measurement;
- a sidelink round trip time (SL-RTT) method may utilize a two-way SL PRS transmission and reception, e.g. being robust to time synchronization between the transmitters and the receivers. In this method, e.g. a SL Rx-Tx time difference between a received and (e.g. scheduled or transmitted) SL PRS transmission is measured and reported by an anchor user device and/or target user device to e.g. estimate the propagation delay and distance between the target and anchor user devices; or

- PC5 may refer to an interface where one user device directly communicates with another user device over a direct channel. In this case, communication with a base station may not be required.

Sidelink positioning may be based on the transmission(s) of SL PRS by at least one (e.g. multiple) anchor user devices to be received by a target user device in e.g. SL time difference of arrival (TDOA) method(s) or SL PRS exchange between the anchor user device(s) and target user device(s) in e.g. an SL (multi-)RTT method to enable localization of a (e.g. certain) target user device within precise latency and accuracy requirements of the corresponding SL positioning session.

Such sidelink positioning of all exemplary aspects may allow (e.g. enhance) at least one of the following:

- horizontal and vertical accuracy, where vertical accuracy refers to accuracy in altitude and determines e.g. the floor for indoor use cases and may distinguish between superposed tracks for road and rail use cases (e.g. bridges);
- positioning service availability, e.g. increasing a percentage value of the amount of time the positioning service is delivering the required position-related data within the performance requirements, divided by the amount of time the system is expected to deliver the positioning service according to the specification in the targeted service area;
- positioning service latency, e.g. time elapsed between the event that triggers the determination of the position-related data and the availability of the position-related data at the system interface;
- time to first fix (TTFF), e.g. time elapsed between the event triggering for the first time the determination of the position-related data and the availability of the position-related data at the positioning system interface;
- update rate; and
- energy consumption, etc.

For instance, along with horizontal and vertical accuracy a positioning service availability and positioning service latency of e.g. more than 99 % availability and less than 20 ms latency may be achieved, e.g. 99,9 % availability and 15ms latency or e.g. 99,9 % availability and 10ms latency. Example use cases may include or comprise:

- V2X, set-2 and set-3 use cases, e.g. lane level positioning use cases such as vehicle platooning, cooperative lane merge, lane change warning, emergency break warning, intersection movement assist, etc., or below meter positioning use cases such as high definition sensor sharing, vulnerable road user (VUR) - collision risk warning, cooperative maneuvers in emergency situations, real-time situation awareness and high-definition maps, etc.

- IIoT, e.g. factory scenarios such as augmented reality in smart factories, mobile control panels with safety functions in smart factories (e.g. within factory danger zones), inbound logistics for manufacturing (e.g. for driving trajectories (e.g. if supported by further sensors like camera, GNSS, IMU) of indoor autonomous driving systems)).

In such a single-sided (one-way) sidelink round trip time (SL-RTT) method, a target UE may transmit sidelink positioning reference signals (SL PRS) to anchor user device(s) and the anchor user device(s) may transmit a response which may e.g. include at least a second SL PRS and/or a Rx-Tx time difference measurement, wherein an anchor user device performs a single-sided RTT measurement considering the receive and transmit timing of the SL PRS. While the single-sided RTT method may be based on a single exchange of SL PRS and hence may offer low latency performance, the Rx-Tx time difference measurement uncertainty caused e.g. by a clock drift may be a dominant component depending on the clock stability and the response time (e.g. 1s). This may decrease positioning accuracy of the target user device. For example, for the response time in the order of few milliseconds the estimated uncertainty is only about 0.1 ns (or 3 cm error) if the clock error between two user devices is 0.1 PPM. But, 50ns estimated uncertainty is introduced in SL-RTT if the clock error between two UEs is 0.2 PPM and the response time is much higher (e.g. 1s).

In such a double-sided (two-way) RTT method may follow the same principles of a single-sided SL-RTT but may eliminate any effects of clock offset errors by introducing a second stage SL-RTT (e.g. via an additional SL PRS exchange). That is, it may mitigate the clock offset by taking into account Rx-Tx time difference measurements from both anchor user device and target user device's perspective. In this method, the transmitter user device of the first stage may be the target user device and the transmitter user device of the second stage may be the anchor user device for Rx-Tx time measurement in each stage. This may allow for an improved distance/ranging estimate between the user devices. The double-sided SL-RTT may improve on SL positioning accuracy performance and may provide robust timing measurements in the presence of uncompensated clock offsets, which may be an issue for the single-sided SL-RTT method. For example, around 0.02ns estimated errors (against 50ns in single-sided case) will be introduced in double-sided RTT if the clock error between two user devices is assumed as 0.2 PPM and the response time is 1s. However, it may introduce additional signaling overhead and latency in positioning.

For instance, both methods may e.g. be combinedly used by the user device(s), method(s), system(s), etc. e.g. according to any exemplary aspect disclosed herein, which may allow for dynamically selecting a SL RTT method and may minimize signaling overhead and latency while meeting accuracy requirements of a SL positioning session.

The features and example embodiments described above may equally pertain to the different aspects, a demodulation reference signal pattern is associated with at least one of: a number indicative of a number of resource elements used for demodulation reference signals in the demodulation reference signal pattern (per slot); and a value indicative of a channel recovery performance (e.g. mean square error) associated with the demodulation reference signal pattern.

It is to be understood that the presentation in this section is merely by way of examples and non-limiting.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

## BRIEF DESCRIPTION OF THE DRAWINGS

The figures show:

Fig. 1     a schematic drawing showing an example embodiment of a system;

Fig. 2a     a flowchart showing an example embodiment of a single-sided sidelink round-trip time positioning method;

Fig. 2b     a flowchart showing an example embodiment of a double-sided sidelink round-trip time positioning method;

Fig. 3     a flowchart showing an example embodiment of a method according to the third exemplary aspect;

Fig. 4     a flowchart showing an example embodiment of a method according to the fourth exemplary aspect;

Fig. 5a     a flowchart showing an example embodiment of a method according to at least one of the third and fourth exemplary aspect;

Fig. 5b     a flowchart showing an example embodiment of a method according to at least one of the third and fourth exemplary aspect;

Fig. 6     a table showing exemplary estimated propagation delay errors with different clock errors and response time;

Fig. 7 a schematic block diagram of an example embodiment of an anchor user device according to the first exemplary aspect and/or an example embodiment of a target user device according to the second exemplary aspect.

## DETAILED DESCRIPTION OF SOME EXEMPLARY EMBODIMENTS

The following description serves to deepen the understanding and shall be understood to complement and be read together with the description as provided in the above summary section of this specification. Some aspects may have a different terminology than e.g. provided in the description above. The skilled person will nevertheless understand that those terms refer to the same subject-matter, e.g. by being more specific.

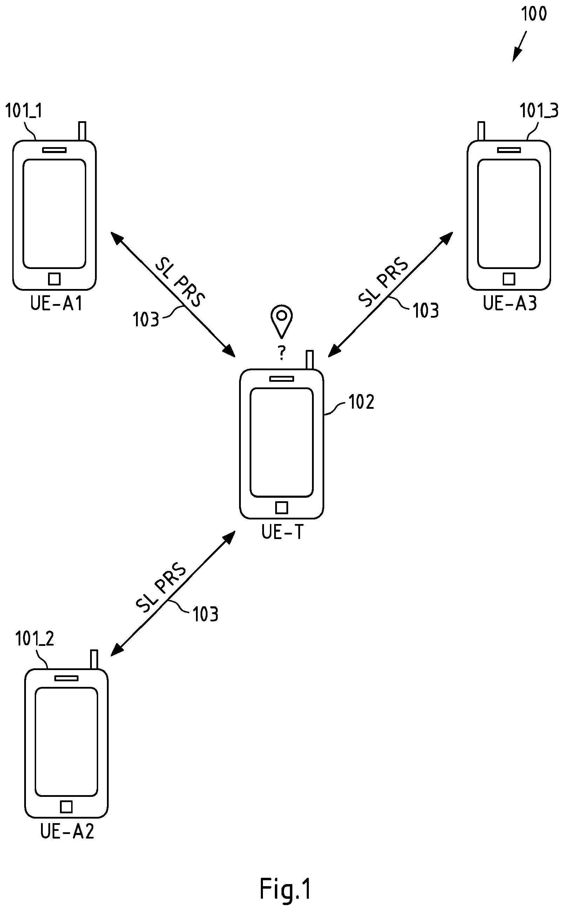

Fig. 1 is a schematic drawing showing an example embodiment of a system 100. Therein, a sidelink round-trip time positioning method is shown for determining the position of target user device 102 (user equipment UE-T) by exchanging (e.g. transmitting and receiving) sidelink positioning reference signals 103 with three anchor user devices 101_1 (user equipment UE_A1), 101_2 (user equipment UE_A2), and 101_3 (user equipment UE_A3). The exemplary system may e.g. be a system according to the sixth exemplary aspect. The exemplary system of Fig. 1 may e.g. perform a method of at least one of the third and fourth exemplary aspect. The exemplary system may comprise an exemplary embodiment of an anchor user device according to the first aspect and an exemplary embodiment of a target user device according to the second aspect. In Fig. 1, SL positioning may be based on the transmissions of SL PRS by multiple anchor user devices (e.g. UEs) 101_1, 101_2, and 101_3 to be received by a target user equipment 102 (e.g. UE) in e.g. SL time difference of arrival (TDOA) methods or SL PRS exchange between the anchor(s) and target user devise(s) (e.g. UEs) in e.g. SL (multi-)RTT method to enable localization of the target user device 102 (e.g. UE) within precise latency and accuracy requirements of the corresponding SL positioning session. Fig. 1 may illustrate a SL positioning scenario where a target UE 102 (UE-T) may e.g. be performing a SL positioning session e.g. exchanging SL PRS with three anchor UEs (UE-A1 101_1, UE-A2 101_2 and UE-A3 101_3) in order to determine its location using SL multi-RTT method. Here, the anchors 101_1, 101_2, and 101_3 are said to provide SL PRS assistance (incl. SL PRS) to the target UE 102.

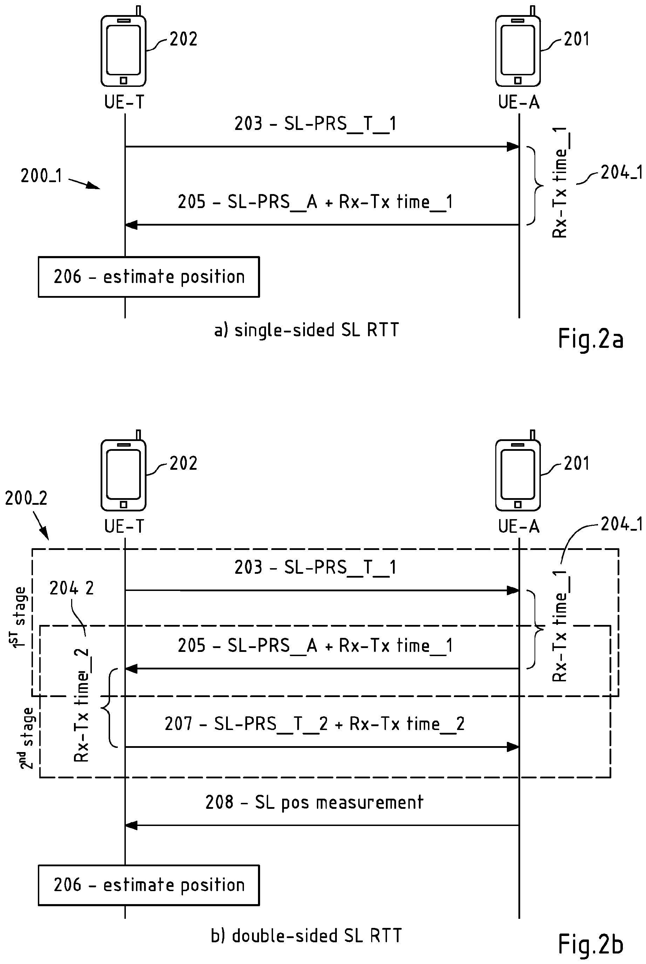

SL-RTT technique may utilize two-way SL PRS transmission and reception, and may be robust to time synchronization between transmitters and receivers. When tight time synchronization is not guaranteed, SL-RTT may be a preferred method for SL positioning. In this method, a SL Rx-Tx time difference between a received and transmitted SL PRS transmission may be measured and reported by anchor UE and/or target UE to estimate the propagation delay thus distance between the target and anchor UEs. Two exemplary types of SL-RTT methods are illustrated in Fig. 2a and Fig. 2b:

Fig. 2a is a flowchart showing an example embodiment of a single-sided sidelink round-trip time positioning method that may be used in an anchor user device according to the first exemplary aspect, a target user device according to the second exemplary aspect, a method according to the third, and/or fourth exemplary aspect

In single-sided (as disclosed above, also referred to as one-way) SL-RTT method 200_1, the target UE 202 may transmit SL PRS 203 to anchor UE(s) 201 and the anchor UE(s) 201 transmits a response 205 which may include a second SL PRS, Rx-Tx time difference measurement 204_1 where anchor UE 201 may perform a single-sided RTT measurement considering the receive timing of the SL PRS 203 and transmit timing of the SL PRS 205. Based thereon the target UE 202 may estimate 206 its position (which may be referred to also as estimating the location of the target UE 202). In some examples, alternatively or additionally the target UE 202 may provide (e.g. transmit) the measurements on the SL PRS timings or the Rx-Tx time difference measurements to another entity, such as to a location server (e.g. an LMF) or a UE acting in the role of LMF. Based thereon, said another entity may perform the location estimation of the target UE 202, e.g. via determining Rx-Tx time difference based on the (e.g. received) measurements on the SL PRS timings.

Fig. 2b is a flowchart showing an example embodiment of a double-sided sidelink round-trip time positioning method that may be used in an anchor user device according to the first exemplary aspect, a target user device according to the second exemplary aspect, a method according to the third, and/or fourth exemplary aspect

Double-sided (also referred to as two-way) RTT method 200_2 may follow the same or equal principles of one-way SL-RTT 200_1 but may reduce (e.g. in the best case: eliminate) the effect(s) of the clock offset errors e.g. via the introduction of 2nd stage SL-RTT round (additional SL PRS exchange). In such a method, in the first stage the target UE 202 transmits a (first) target SL PRS 203 to the anchor UE 201, the anchor UE 201 may perform an Rx-Tx time (difference) measurement 204_1 (e.g. based on the receive time of the first target SL PRS 203 and e.g. scheduling information on a scheduled (first) anchor SL PRS 205 or, after transmitting the anchor SL PRS 205, the (actual) transmit time of the anchor SL PRS 205), the anchor UE 201 then may transmit (the result of) the Rx-Tx time difference measurement to the target UE 202, e.g. alongside the (first) anchor SL PRS 205 or separate from the (first) anchor SL PRS 205 (e.g. after transmission of the anchor SL PRS 205). In the second stage, the anchor UE 201 transmits the (first) anchor SL PRS 205 to the target UE 202, the target UE 202 may perform a (second) Rx-Tx time (difference) measurement 204_2 e.g. (based on the receive time of the first anchor SL PRS 205 and based on scheduling information on a scheduled (second or addional) target SL PRS 207 or after transmitting the (second) target SL PRS using the (actual) transmit time of target SL PRS 207). So roughly speaking, the Tx-UE of the 1st stage is the target UE 202 and the Tx-UE of the 2nd stage (e.g. determining Rx-Tx time 204_2 based on signals 207, 205) is the anchor UE 201 in Rx-Tx time measurement 204_1, 204_2 of a respective (e.g. each) stage. This may bring about an improved distance/ranging estimate between the pair of UEs and provides robust timing measurements in the presence of uncompensated clock offsets, which is an issue for the single-sided SL-RTT method. UE-A 201 may report e.g. a receive time of SL-PRS_T_2 207, e.g. comprised by a positioning measurement transmission 208.

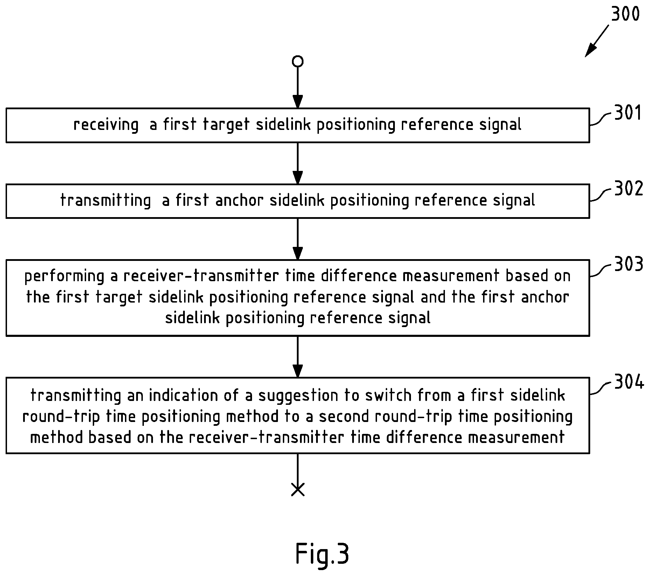

Fig. 3 is a flowchart showing an example embodiment of a method according to the third exemplary aspect. This flowchart 300 may for instance be performed by an anchor user device according to the first exemplary aspect, e.g. UE 101, 201.

In a step 301, a first target sidelink positioning reference signal is received. In a step 302, a first anchor sidelink positioning reference signal is transmitted (e.g. in response to the received first target sidelink positioning reference signal). In a step 303, a receiver-transmitter time difference measurement is performed based on the first target sidelink positioning reference signal and the first anchor sidelink positioning reference signal. In a step 304, an indication of a suggestion to switch from a first sidelink round-trip time positioning method to a second round-trip time positioning method is transmitted based on the receiver-transmitter time difference measurement

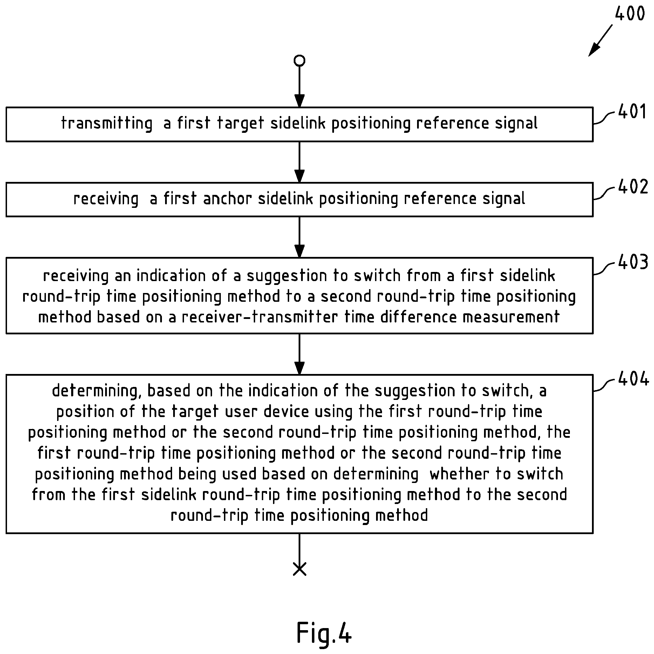

Fig. 4 is a flowchart showing an example embodiment of a method according to the fourth exemplary aspect. This flowchart 400 may for instance be performed by a target user device according to the second exemplary aspect, e.g. UE 102, 202.

In a step 401, a first target sidelink positioning reference signal is transmitted. In a step 402, a first anchor sidelink positioning reference signal is received. In a step 403, an indication of a suggestion to switch from a first sidelink round-trip time positioning method to a second round-trip time positioning method is received based on a receiver-transmitter time difference measurement. In a step 404, a position of the target user device using the first round-trip time positioning method or the second round-trip time positioning method is determined, e.g. based on (e.g. in response to) the received indication of the suggestion to switch, the first round-trip time positioning method or the second round-trip time positioning method being used based on determining whether to switch from the first sidelink round-trip time positioning method to the second round-trip time positioning method. For instance, if the indication of the suggestion to switch indicates that the second round-trip time positioning method should be used, the position of the target user device may be determined based on the second round-trip time positioning method; or if the indication of the suggestion to switch indicates that no switch should be performed or that the first round-trip time positioning method should be used, the position of the target user device may be determined based on the first round-trip time positioning method.

According to an exemplary embodiment (e.g. according to all exemplary aspects), upon receiving an indication on at least the current SL-RTT method and the positioning requirement of a SL positioning session with a target UE, an anchor UE may determine and indicate to the target UE whether or not to perform an additional SL-RTT stage (e.g. as an example of whether or not to perform double-sided SL-RTT method) up on completion of the current SL-RTT stage (i.e. single-sided RTT) via SL-RTT method switch assistance information (e.g. an indication of a suggestion to switch). Wherein the determination may be based on at least the clock-drift characteristics of the anchor UE, Rx-Tx time difference (e.g. response time), SyncRef change may occur. That may comprise e.g.:

- upon receiving request for Rx-Tx time difference measurement, and information on current/intended SL-RTT method, as well as the positioning requirement from a target UE in a SL-RTT positioning session, the anchor UE may measure first Rx-Tx time difference measurement and estimates the error that may be introduced in SL-RTT measurement, wherein the determination may be based on at least the clock-drift characteristics of the UE, Rx-Tx time, SyncRef change;
- based on the time measurement error estimated at anchor UE, the SL positioning requirement and the SL-RTT method initiated by the target UE, the anchor UE may indicate the target UE whether or not to trigger additional second Rx-Tx time measurement at the target UE (i.e. trigger second stage to switch to double-sided) via SL-RTT method switch asst. info. message (an indication of a suggestion to switch); and/or
- the target UE may (not-)trigger additional second Rx-Tx time measurement (i.e. may (not-)switch to double-sided RTT) based on at least the indication e.g. SL-RTT method switch asst info. message received from the anchor UE.

An anchor UE (e.g. anchor user device according to the first exemplary aspect) may be configured to (or comprise means for) at least one of:

- receive request for Rx-Tx time difference measurement on SL PRS from a target UE (e.g. comprised by a request for the indication of the suggestion to switch);
- receive request for SL-RTT method switch assistance information (e.g. comprised by a request for the indication of the suggestion to switch);

- the SL-RTT method switch assistance information may contain at least one or more of the following:

  - current SL-RTT method (default SL-RTT method which has been initiated) SL positioning requirement;
  - clock error characteristic of the target UE (e.g. in PPM);
  - SyncRef ID of the synchronization source of the target UE;

- receive at least first SL PRS from the target UE and transmit second SL PRS to the target UE;
- measure and send to target UE a first Rx-Tx time difference where anchor UE may perform the single-sided RTT measurement considering the receive and transmit timing of the first and second SL PRS, respectively;
- determine an error estimate (e.g. error range, degree of error) that may be introduced in SL-RTT measurement, wherein the determination may be based on at least the clock-drift characteristics of the UE, Rx-Tx time difference, SyncRef change;
- determine whether or not to trigger additional second Rx-Tx time difference measurement at the target UE (as an example to trigger second stage to switch to double-sided) based e.g. on at least the estimated measurement error, the SL positioning requirement and/or the SL-RTT method initiated by the target UE;
- generate SL-RTT method switch asst. info. message based e.g. on at least the determination of whether or not to trigger additional second Rx-Tx time difference measurement at the target UE and the estimated measurement error;

  - SL-RTT method switch asst. info. message (an indication of a suggestion to switch) may e.g. contain or comprise at least one of the following:

    - indication (e.g. 1-bit) whether or not an additional second Rx-Tx time measurement at the target UE is needed (or whether or not extend the single-sided SL-RTT to double-sided RTT);
    - estimated measurement error; or
    - indication on whether or not there is change of SyncRef during Rx-Tx time difference duration;

- send SL-RTT method switch asst. info. to the target UE; or
- receive third SL PRS from the target UE if target UE chooses to perform second Rx-Tx time difference measurement.

A target UE (e.g. target user device according to the second exemplary aspect) may be configured to (or comprise means for) at least one of:

- send request to an anchor UE for Rx-Tx time difference measurement on SL PRS (e.g. comprised by a request for the indication of the suggestion to switch);
- send request to the anchor UE for SL-RTT method switch assistance information (e.g. comprised by a request for the indication of the suggestion to switch);
- transmit SL PRS (e.g. first target SL PRS) to the anchor UE;
- receive SL-RTT method switch asst info. (an indication of a suggestion to switch) from the anchor UE;
- determine whether or not to perform second Rx-Tx time measurement (or trigger second stage to switch to double-sided) based on the SL-RTT method switch asst info; or
- send third SL PRS (e.g. second target SL PRS) to the anchor UE if determined to perform second Rx-Tx time difference measurement.

Further, a conditional extension of single-sided RTT to double-sided RTT based on input from anchor UE may be utilized (e.g. in a method according to the third and/or fourth exemplary aspect), e.g. in order to reduce signaling overhead and improve latency performance of SL-RTT. (In this regard,) the target UE may be configured (e.g. by a network, pre-configuration, another UE or itself) to start SL positioning session with e.g. single-sided RTT (as e.g. an active sidelink round-trip time positioning method) which (e.g. only) may cover the 1st stage of double-sided RTT (cf. Fig. 2a/2b). During the 1st stage (or single-sided SL-RTT Rx-Tx measurement), the anchor UE may determine Rx-Tx time difference measurement error and further may determine whether or not a switch/transition from single-sided to double-sided RTT is needed e.g. to meet the accuracy requirement of the target UE. Subsequently, the anchor UE may indicate/recommend to the target UE whether or not to initiate an additional stage of SL-RTT e.g. 2nd stage of SL-RTT. Based on this input, the target UE may make an informed decision on whether or not to switch/transition to double-sided SL-RTT. When the SL positioning accuracy requirement can be met by single-sided SL-RTT e.g. 1st stage SL-RTT alone, the 2nd stage RTT (or double-sided SL-RTT) may not be triggered which may e.g. reduce signaling overhead and latency.

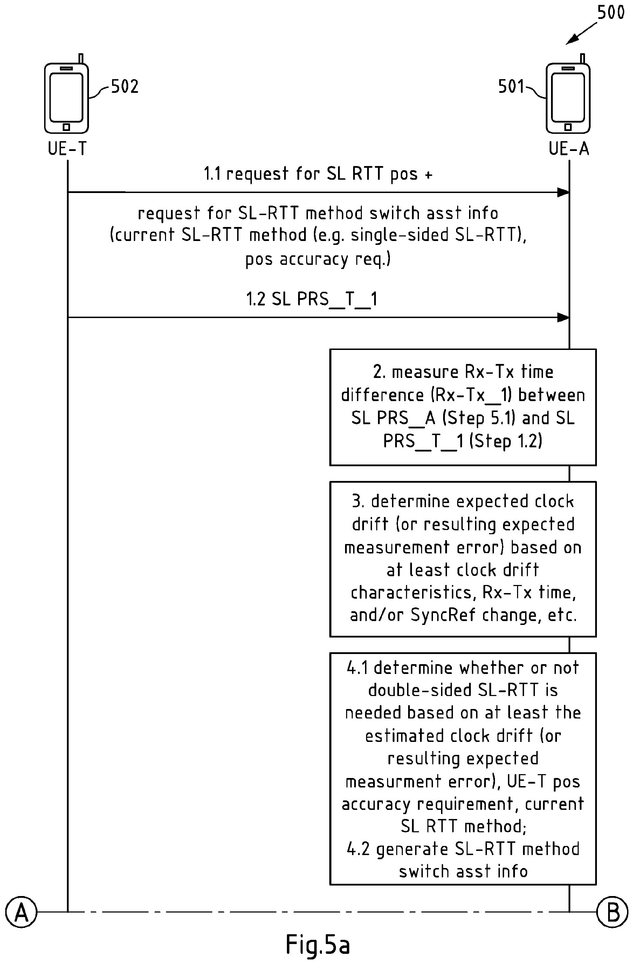

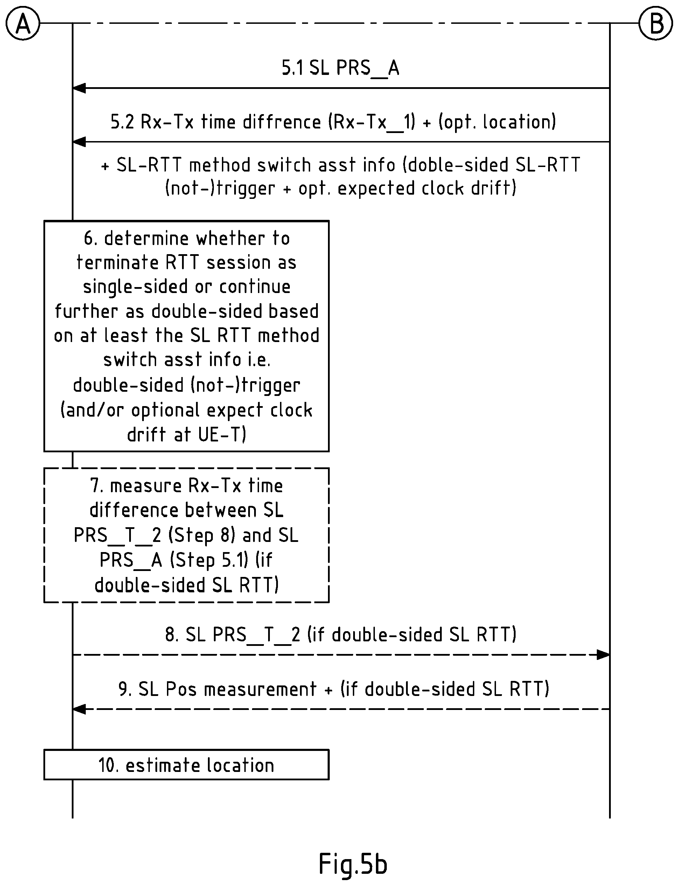

Fig. 5a and Fig. 5b show a flowchart showing an example embodiment of a method according to at least one of the third and fourth exemplary aspect, e.g. performed by a target user device 502 (e.g. a target user device according to the second exemplary aspect) and at least one anchor user device 501 (e.g. an anchor user device according to the first exemplary aspect). The flowchart 500 shows the following steps:

Step-1: Target UE-T 502 may send SL-RTT request (message) i.e. request for Rx-Tx time difference measurement on SL PRS to anchor UE-A 501. In this request, UE-T may also include request for SL-RTT method switch asst info (Step 1.1) (e.g. comprised in a request for an indication to switch). Along with this request message, UE-T1 may also transmit a SL PRS referred to as SL PRS_T_1 (Step 1.2). Alternatively, the SL PRS_T_1 may be transmitted (Step 2.1) separately from the request message (Step 1.1). In an example embodiment, the request message (Step 1.1) is not performed (e.g. not transmitted by UE-T 502) and a transmitted SL PRS_T_1 (Step 1.2) may implicitly indicate a request for SL-RTT measurement (e.g. Rx-Tx time difference measurement) or the request may have been previously indicated to the UE-A 501.

The request for SL-RTT method switch asst info may for instance contain or comprise at least one of:

- current SL-RTT method, which may be default SL-RTT method (e.g. active SL-RTT method) that has been initiated. If no switch is triggered, UE-T and UE-A will perform only the current (active) SL-RTT;
- in such an example, single-sided RTT (which may be seen as only the 1st stage of double-sided SL-RTT) method may be considered as the current (active) SL-RTT;
- SL positioning requirement;
- clock error characteristic of the target UE (e.g. in PPM); or
- SyncRef ID, i.e. synchronization source of the target UE.

Step-2: Anchor UE-A 501 may measure or determine the Rx-Tx time difference (Rx-Tx_1) by performing the single-sided RTT measurement considering the receive-and-transmit timing of SL PRS_T_1 and second SL PRS_A, respectively. The reception timing of the SL PRS_T_1 may be determined based on the reception of the SL PRS_T_1 by the anchor UE-A 501. The transmit timing of the SL PRS_A may be determined based on, for example, scheduled radio resources (e.g. SL PRS resources) for transmitting the SL PRS_A. For instance, UE-A 501 may determine when the SL PRS_A is to be or will be transmitted. Thus, the UE-A 501 may determine the Rx-Tx_1 for the RTT measurement.

Step-3: UE-A(may act as UE-A(1) under certain conditions, then, in the following "UE-A(1)" is used to refer to this specific UE) may determine the estimated error in the SL-RTT measurement, wherein the determination may be based on at least the clock-drift characteristics of the UE, Rx-Tx time difference, SyncRef change.

The estimate error (uncertainty) may mean error range (e.g. error is estimated to be in a certain error range), an error value with certain confidence interval, degree of error or error level (e.g. low, medium, high), error value or range with certain probability / likelihood.

For example, if two UEs have the same synchronization source, the clock error between two UEs (UE-T and UE-A) may be within ±0.1 PPM. However, if the synchronization source is different, the clock error may be larger than ±0.1 PPM. With the clock error between two UEs, the potential error may be introduced in the estimated propagation delay as follows:

$$d_{\text{error}} \approx \frac{1}{2}\left(e_{\text{UE-T}} - e_{\text{UE-A}}\right) \times T_{\text{reply}},$$

where $d_{\text{error}}$ is short for estimated propagation delay error, $e_{\text{UE-T}}$ - $e_{\text{UE-A}}$ is the clock error between two UEs and $T_{\text{reply}}$ is the response time taken by the responding UE (as an example of the Rx-Tx time difference), which may be the difference between transmitting time of SL PRS and receiving time of SL PRS.

Exemplary embodiment 3-1 (e.g. to Step-3): UE-A may be aware of its clock error characteristics (e.g. either by pre-configuration or based on the history of the accuracy level achieved in the past SL RTT positioning sessions), e.g. it may be aware that its clock error is below a certain error threshold (e.g. better 0.1 PPM). Based on that, assuming certain clock error at UE-T, it may estimate the measurement error.

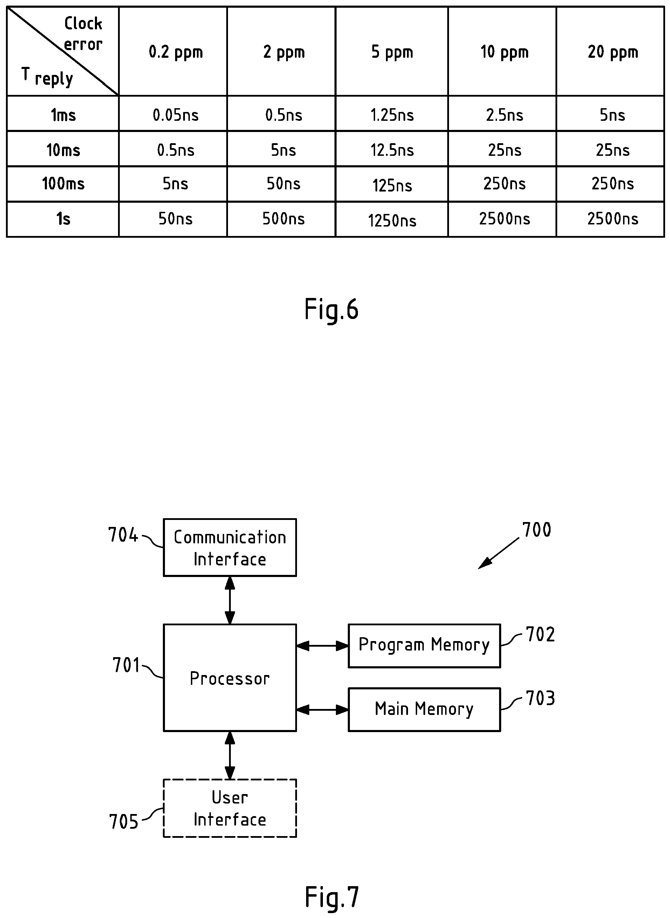

Exemplary embodiment 3-1-1 (e.g. to embodiment 3-1 of above): UE-T may be aware of its own clock error characteristics (e.g. clock error in PPM) and may indicate to UE-A. Then, UE-A may compute the clock error between two UEs and estimate the error. Fig. 6 shows an exemplary impact of clock error (and response time) on the propagation delay error (e.g. the estimated propagation delay errors with different clock errors and response time $T_{\text{reply}}$).

Exemplary embodiment 3-2 (e.g. to Step-3): The response time, i.e. Rx-Tx time difference may be used to compute the measurement error as shown above. The estimated propagation delay errors for SL-RTT may increase with the increase of response time (e.g. Rx-Tx time difference (or $T_{\text{reply}}$)). Fig. 6 shows the exemplary impact of response time (and clock error) on the propagation delay error.

Exemplary embodiment 3-4 (e.g. to Step-3): When there the synchronization sources of UE-A is different from the e.g. indicated (in Step-1) synchronization source of UE-T, UE-A may consider clock error higher than ±0.1 PPM to compute the measurement error.

Exemplary embodiment 3-5 (e.g. to Step-3): When there is a change in SyncRef of UE-A, UE-A may add additional error offset to the measurement error since the synchronization source change might have influenced the Rx-Tx measurement at UE-A.

Step-4.1: UE-A(1) may determine whether or not to trigger additional second Rx-Tx time difference measurement at the target UE (e.g. an example to trigger second stage to switch to double-sided) based on at least the estimated time measurement error, the SL positioning requirement and the SL-RTT method initiated by the target UE.

Exemplary embodiment 4.1-1 (e.g. to Step-4.1 of above): If the estimated measurement error (e.g. estimated in Step-3) is above a certain measurement error threshold, UE-A(1) may determine that an additional second Rx-Tx time difference measurement at the target UE e.g. additional (2nd) stage of SL RTT (or transition to double-sided SL-RTT) is needed.

Exemplary embodiment 4.1-2 (e.g. to Step-4.1): Based on the clock error characteristics (e.g. if UE-A is aware as mentioned in exemplary embodiment 3-1), e.g. if clock error is above an error threshold (e.g. 0.15 PPM), UE-A(1) may determine that an additional stage of SL-RTT is needed.

Exemplary embodiment 4.1-3 (e.g. to Step-4.1): If the response time (Rx-Tx time difference) is above a certain time duration threshold (in hundreds of milliseconds), UE-A(1) may determine that an additional stage of SL-RTT is needed.

Exemplary embodiment 4.1-4 (e.g. to Step-4.1): Based on history of accuracy achieved in past single-sided SL-RTT positioning sessions, e.g. if percentage of single-sided SL RTT measurements that have met a certain accuracy requirement (e.g. accuracy requirement indicated by UE-T) is above a certain threshold (e.g. 90%), UE-A(1) may determine that an additional stage of SL-RTT is needed.

Step-4.2: E.g. generate SL-RTT method switch asst. info. message, e.g. based on (e.g. at least) the determination of whether or not to trigger additional second Rx-Tx time difference measurement at the target UE and the estimated error in first Rx-Tx time difference measurement

If UE-A(1) e.g. determines that an additional stage of SL-RTT is needed in Step-4.1, SL-RTT method switch asst. info. message may be generated and it may contain at least one of the following:

- indication (e.g. 1-bit) whether or not an additional second Rx-Tx time measurement at the target UE is needed (i.e. whether or not extend the single-sided SL-RTT to double-sided RTT);
- estimated measurement error;
- clock error of UE-A; or
- indication on whether or not there is change of SyncRef during Rx-Tx time difference duration.

Step-5: UE-A may send a response (an indication of a suggestion to switch) to SL-RTT request received in Step-1 by e.g. sending SL PRS (SL PRS_A) (see Step-5.1) as well as measured Rx-Tx time difference (Rx-Tx_1) in Step-2 and location of UE-A in case of absolute positioning (see Step-5.2). In addition, the response message also may include SL-RTT method switch asst info (see Step-5.2).

Exemplary embodiment 5-1 (e.g. to Step-5 of above): Different (at least two) SL PRS may be configured to implicitly convey from UE-A to UE-T whether or not an additional second Rx-Tx time measurement at the target UE is needed. That may be transmission of one SL-PRS e.g. SL PRS_A_1 from UE-A does not trigger double-sided RTT, whereas the transmission of another SL PRS e.g. SL PRS_A_2 from UE-A may trigger double-sided RTT at UE-T.

Step-6: UE-T may determine whether or not to perform second Rx-Tx time measurement (or trigger second stage to switch to double-sided) based on the SL-RTT method switch asst info.

Exemplary embodiment 6-1 (e.g. to Step-6 of above): If SL-RTT method switch asst info e.g. received in Step-5.2 indicates that an additional second Rx-Tx time measurement at the target UE is needed, UE-T may trigger additional stage of SL RTT (cf. Step-7 to Step-9).

Exemplary embodiment 6-2 (e.g. to Step-6): If measurement error indicated in SL-RTT method switch asst info e.g. received in Step-5.2 above a certain measurement error threshold, UE-T may trigger additional stage of SL RTT (cf. Step-7 to Step-9).

Exemplary embodiment 6-3 (e.g. to Step-6): The clock error e.g. indicated in SL-RTT method switch asst info and/or the response time (Rx-Tx_1) e.g. received in Step-5.2 may be used by UE-T to compute measurement error as e.g. described in Step-3; and if the error is above a certain measurement error threshold, UE-T may trigger additional stage of SL RTT (cf. Step-7 to Step-9).

Exemplary embodiment 3-4-1 (e.g. to exemplary embodiment 3-4 of above):if a change in SyncRef during response time of UE-A is indicated in SL-RTT method switch asst info, UE-T may add additional error offset to the measurement error computed in exemplary embodiment 3-4.

Step-7 and Step-8: (e.g. only) if double-sided SL-RTT is triggered, UE-T may perform additional stage (2nd stage of double-sided SL-RTT) of SL-RTT by sending another SL PRS (SL PRS_T_2) to UE-A and measuring the Rx-Tx time difference (Rx-Tx_2) by performing RTT measurement considering the receive and transmit timing of SL PRS_A and second SL PRS_T_2, respectively.

Step-9: (e.g. only) if double-sided SL-RTT is triggered, UE-A may report further SL RTT positioning measurements to UE-T to assist in UE-T positioning.

Step-10: UE-T may estimate its position based on SL RTT measurement(s). If the double-sided SL-RTT measurement is not triggered in Step-6, Step-10 may be performed based on single-sided SL-RTT measurement. In that case, Step-7 to Step-9 are not performed and Step-10 may be performed immediately after Step-6, which may allow for saving signaling overhead and improving latency performance.

Additional exemplary embodiments of all exemplary aspects that may also be considered to be disclosed:

In an embodiment, target UE may start SL positioning with double-sided SL-RTT method as default method, and based on the anchor UE's SL-RTT method switch asst info., the target UE may conclude the SL positioning session as single-sided RTT method-based i.e. terminate the SL positioning session after 1st stage of double-sided RTT, if there is indication an additional second Rx-Tx time measurement at the target UE is not needed (e.g. the positioning accuracy requirement can be met with a single-sided SL-RTT).

An LMF or server UE may decide whether single- or double-sided RTT is performed (e.g. an LMF or server UE may determine whether to switch from the first sidelink round-trip time positioning method to the second round-trip time positioning method). For example, if the LMF chooses single-sided RTT but a UE reports back excessive clock drift (e.g., based on measurements with respect to another UE with stable clock as known from its capability report), then the LMF may command the UEs to transmit/measure the second part of the double-sided RTT measurement and report the results.

Conversely, a report of a potential or actual SyncRef change event within relevant measurement period by the target UE to the LMF may trigger in response a similar adaptive switch between single- and double-sided RTT measurements.

Fig. 7 is a schematic block diagram of an apparatus 700 according to an exemplary aspect, which may for instance represent one of the user devices according to the first or second exemplary aspect.

Apparatus 700 comprises a processor 701, program memory 702, working or main memory 703, data memory, communication interface(s) 704, and an optional user interface 705.

Apparatus 700 may for instance be configured to perform and/or control or comprise respective means (at least one of 701 to 705) for performing and/or controlling the method according to the third and/or fourth exemplary aspect. Apparatus 700 may as well constitute an apparatus comprising at least one processor (701) and at least one memory (702) storing instructions that, when executed by the at least one processor,, cause an apparatus, e.g. apparatus 700 at least to perform and/or control the method according to all exemplary aspects.

An apparatus 700 representing an anchor user device (or anchor user equipment) according to the first exemplary aspect further may comprise a receiver-transmitter time difference measurer (not shown) e.g. as means for performing a receiver-transmitter time difference measurement based on the first target sidelink positioning reference signal and the first anchor sidelink positioning reference signal. The receiver-transmitter time difference measurer may be comprised by the processor 701 or may be a separate unit (not shown).

An apparatus 700 representing a target user device (or target user equipment) according to the second exemplary aspect further may comprise a position determiner (not shown) e.g. as means for determining, based on the received indication of the suggestion to switch, a position of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method. Further, an apparatus 700 representing a target user device (or target user equipment) according to the second exemplary aspect further may comprise a switch determiner (not shown) for determining whether to switch from the first sidelink round-trip time positioning method to the second round-trip time positioning method, e.g. as means for determining whether to switch from the first sidelink round-trip time positioning method to the second round-trip time positioning method. The position determiner may be comprised by the processor 701 or may be a separate unit (not shown). The switch determiner may be comprised by the processor 701 or may be a separate unit (not shown).

Processor 701 may for instance further control the memories 702 to 703, the communication interface(s) 704, and/or the optional user interface 705.

Processor 701 may for instance execute program code stored in program memory 702, which may for instance represent a readable storage medium comprising program code that, when executed by processor 701, causes the processor 701 to perform the method according to the third or fourth exemplary aspect.

Processor 701 (and also any other processor mentioned in this specification) may be a processor of any suitable type. Processor 701 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s)/server(s). The relevant structure/hardware has been programmed in such a way to carry out the described function. Processor 701 may for instance be an application processor that runs an operating system.

Program memory 702 may also be included into processor 701. This memory may for instance be fixedly connected to processor 701, or be at least partially removable from processor 701, for instance in the form of a memory card or stick. Program memory 702 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 702 may also comprise an operating system for processor 701. Program memory 702 may also comprise a firmware for apparatus 700.

Apparatus 700 comprises a working memory 703, for instance in the form of a volatile memory. It may for instance be a Random Access Memory (RAM) or Dynamic RAM (DRAM), to give but a few non-limiting examples. It may for instance be used by processor 701 when executing an operating system and/or computer program.

Data memory may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory may for instance store one or more pieces of information, e.g. a measurement of a first signal, information on a first subspace, additional information.

Communication interface(s) 704 enable apparatus 700 to communicate with other entities, e.g. another apparatus. The communication interface(s) 704 may e.g. be used for transmitting and/or receiving messages, e.g. a sidelink positioning reference signal and/or an indication (e.g. an indication of a suggestion to switch).

The communication interface(s) 704 may for instance comprise a wireless interface, e.g. a cellular radio communication interface and/or a WLAN interface) and/or wire-bound interface, e.g. an IP-based interface, for instance to communicate with entities via the Internet Communication interface(s) may enable apparatus 700 to communicate with other entities, for instance one or more entities as comprised by a mobile communication network

User interface 705 is optional and may comprise a display for displaying information to a user and/or an input device (e.g. a keyboard, keypad, touchpad, mouse, etc.) for receiving information from a user.

Some or all of the components of the apparatus 700 may for instance be connected via a bus. Some or all of the components of the apparatus 700 may for instance be combined into one or more modules.

Some examples:

Example 1: An anchor user device comprising at least one processor; and at least one memory storing instructions that, when executed by the at least one processor, cause the anchor user device at least to perform:

- receiving a first target sidelink positioning reference signal;
- transmitting a first anchor sidelink positioning reference signal;
- performing a receiver-transmitter time difference measurement based on the first target sidelink positioning reference signal and the first anchor sidelink positioning reference signal;
- transmitting an indication of a suggestion to switch from a first sidelink round-trip time positioning method to a second round-trip time positioning method based on the receiver-transmitter time difference measurement

Example 2: The anchor user device according to example 1, further caused to perform:

- determining whether to switch from the first sidelink round-trip time positioning method to the second round-trip time positioning method based on the performed receiver-transmitter time difference measurement,
- wherein the indication of the suggestion to switch at least indicates a suggestion whether to switch from the first sidelink round-trip time positioning method to the second round-trip time positioning method based on the determining whether to switch from the first sidelink round-trip time positioning method to the second round-trip time positioning method.

Example 3: The anchor user device according to example 1 or 2, further caused to perform:

- determining an uncertainty of the receiver-transmitter time difference measurement; wherein optionally and when dependent on example 2, the determining whether to switch is based on the uncertainty;
  the anchor user device further optionally caused to perform:
- transmitting an indication of the determined uncertainty.

Example 4: The anchor user device according to any one of examples 1 to 3, further caused to perform:

- receiving a request for the indication of the suggestion to switch from the first sidelink round-trip time positioning method to the second round-trip time positioning method based on the receiver-transmitter time difference measurement;
- wherein the transmitting the indication of the suggestion to switch from the first sidelink round-trip time positioning method to the second round-trip time positioning method is performed based on to the received request.

Example 5: The anchor user device according to any one of examples 1 to 4, further caused to perform:

- transmitting the receiver-transmitter time difference measurement for determining whether to switch from the first sidelink round-trip time positioning method to the second round-trip time positioning method.

Example 6: The anchor user device according to any one of examples 1 to 5, wherein the first sidelink round-trip time positioning method is a single sided round-trip time positioning method based on the receiver-transmitter time difference measurement and the second round-trip time positioning method a double-sided round-trip time positioning method based on the receiver-transmitter time difference measurement and a second receiver-transmitter time difference measurement.

Example 7: The anchor user device according to any one of examples 1 to 6, wherein the indication of the suggestion to switch comprises a request for a second anchor sidelink positioning reference signal.

Example 8: A target user device comprising at least one processor; and at least one memory storing instructions that, when executed by the at least one processor, cause the target user device at least to perform:

- transmitting a first target sidelink positioning reference signal;
- receiving a first anchor sidelink positioning reference signal;
- receiving an indication of a suggestion to switch from a first sidelink round-trip time positioning method to a second round-trip time positioning method based on a receiver-transmitter time difference measurement;
- performing, based on the received indication of the suggestion to switch, positioning of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method.

Example 9: The target user device according to example 8, wherein the performing positioning of the target user device comprises determining, based on the received indication of the suggestion to switch, a position of the target user device using the first round-trip time positioning method or the second round-trip time positioning method.

Example 10: The target user device according to example 8 or 9, further caused to perform:

- determining whether to switch from the first sidelink round-trip time positioning method to the second round-trip time positioning method as suggested by the received indication; or
- means for triggering a determining whether to switch from the first sidelink round-trip time positioning method to the second round-trip time positioning method as suggested by the received indication.

Example 11: The target user device according to example 10, further caused to perform:

- switching to the second round-trip time positioning method used in case the determining whether to switch or the triggering of the determining whether to switch yields to the result to switch from the first sidelink round-trip time positioning method to the second round-trip time positioning method;
- transmitting a second target sidelink positioning reference signal; and
- performing a second receiver-transmitter time difference measurement based on the received first anchor sidelink positioning reference signal and the scheduled (e.g. transmitted) second target sidelink positioning reference signal.

Example 12: The target user device according to any one of examples 8 to 11, wherein the first sidelink round-trip time positioning method is a single sided round-trip time positioning method and the second round-trip time positioning method a double-sided round-trip time positioning method.

Example 13: The target user device according to any one of examples 8 to 12, further caused to perform:

- receiving an indication of an uncertainty of the receiver-transmitter time difference measurement; wherein the determining whether to switch from the first sidelink round-trip time positioning method to the second round-trip time positioning method is further based on the received indication of the uncertainty.

Example 14: The target user device according to any one of examples 8 to 13, wherein the indication of the suggestion to switch comprises an indication of a clock error of the anchor user device, wherein the determining whether to switch from the first sidelink round-trip time positioning method to the second round-trip time positioning method is further based on the indication of the clock error.

The disclosed exemplary aspects may allow for reducing signaling overhead and improving latency performance of SL-RTT method by e.g. conditionally extending a single-sided SL-RTT method to perform double-sided SL-RTT method only when there is potential risk of not meeting the SL positioning requirement with single-sided SL-RTT method due to potential measurement error at least at the anchor UE.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. This expression "A and/or B" is considered to have the same meaning as "at least one of A or B", and "at least one of A and B". Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A. Further, the term "comprising" may be limited to "consisting of", i.e. consisting of only the specified elements.

The expression "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

It will be understood that all presented embodiments are only exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

List of abbreviations:

| | |
|---|---|
| 3GPP | 3rd Generation Partnership Project |
| 5G | Fifth-Generation |
| asst info. | Assistance information |
| DL | Downlink |
| ID | Identifier |
| IIoT | Industrial Internet of Things |
| IR | Invention Report |
| IUC | Inter-UE Coordination |
| LMF | Location Management Function |
| LPP | LTE Positioning Protocol |
| NR | New Radio |
| opt | optionally |
| pos | positioning |
| req | requirement |
| RSRP | Reference Signal Receive Power |
| RTT | Round Trip Time |
| SL | Sidelink |
| SyncRef | Synchronization Reference |
| PPM | Parts Per Million |
| PRS | Positioning Reference Signal |
| RTT | Round-Trip Time |
| Rx | Receiver / Receive |
| TRP | Transmit Receive Point |
| Tx | Transmitter / Transmit |
| V2X | Vehicle-to-anything |
| UE | User Equipment |
| UL | Uplink |
| WI | Work Item |

**Claims**

1. An anchor user device comprising:

 - means for receiving a first target sidelink positioning reference signal;
 - means for transmitting a first anchor sidelink positioning reference signal;
 - means for performing a receiver-transmitter time difference measurement based on the first target sidelink positioning reference signal and the first anchor sidelink positioning reference signal;
- means for transmitting an indication of a suggestion to switch from a first sidelink round-trip time positioning method to a second round-trip time positioning method based on the receiver-transmitter time difference measurement

2. The anchor user device according to claim 1, further comprising:

- means for determining whether to switch from the first sidelink round-trip time positioning method to the second round-trip time positioning method based on the performed receiver-transmitter time difference measurement,
- wherein the indication of the suggestion to switch at least indicates a suggestion whether to switch from the first sidelink round-trip time positioning method to the second round-trip time positioning method based on the determining whether to switch from the first sidelink round-trip time positioning method to the second round-trip time positioning method.

3. The anchor user device according to claim 1 or 2, further comprising:

- means for determining an uncertainty of the receiver-transmitter time difference measurement;

wherein optionally and when dependent on claim 2, the determining whether to switch is based on the uncertainty;
the anchor user device further optionally comprising:

- means for transmitting an indication of the determined uncertainty.

4. The anchor user device according to any one of claims 1 to 3, further comprising:

- means for receiving a request for the indication of the suggestion to switch from the first sidelink round-trip time positioning method to the second round-trip time positioning method based on the receiver-transmitter time difference measurement;
- wherein the transmitting the indication of the suggestion to switch from the first sidelink round-trip time positioning method to the second round-trip time positioning method is performed based on to the received request.

5. The anchor user device according to any one of claims 1 to 4, further comprising:

- means for transmitting the receiver-transmitter time difference measurement for determining whether to switch from the first sidelink round-trip time positioning method to the second round-trip time positioning method.

6. The anchor user device according to any one of claims 1 to 5, wherein the first sidelink round-trip time positioning method is a single sided round-trip time positioning method based on the receiver-transmitter time difference measurement and the second round-trip time positioning method a double-sided round-trip time positioning method based on the receiver-transmitter time difference measurement and a second receiver-transmitter time difference measurement.

7. The anchor user device according to any one of claims 1 to 6, wherein the indication of the suggestion to switch comprises a request for a second anchor sidelink positioning reference signal.

8. A target user device comprising:

- means for transmitting a first target sidelink positioning reference signal;
- means for receiving a first anchor sidelink positioning reference signal;
- means for receiving an indication of a suggestion to switch from a first sidelink round-trip time positioning method to a second round-trip time positioning method based on a receiver-transmitter time difference measurement;
- means for performing, based on the received indication of the suggestion to switch, positioning of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method.

9. The target user device according to claim 8, wherein the means for performing positioning of the target user device comprises means for determining, based on the received indication of the suggestion to switch, a position of the target user device using the first round-trip time positioning method or the second round-trip time positioning method.

10. The target user device according to claim 8 or 9, further comprising:

- means for determining whether to switch from the first sidelink round-trip time positioning method to the second round-trip time positioning method as suggested by the received indication; or

- means for triggering a determining whether to switch from the first sidelink round-trip time positioning method to the second round-trip time positioning method as suggested by the received indication.

11. The target user device according to claim 10, further comprising:

- means for switching to the second round-trip time positioning method used in case the determining whether to switch or the triggering of the determining whether to switch yields to the result to switch from the first sidelink round-trip time positioning method to the second round-trip time positioning method;

- means for transmitting a second target sidelink positioning reference signal; and

- means for performing a second receiver-transmitter time difference measurement based on the received first anchor sidelink positioning reference signal and the scheduled second target sidelink positioning reference signal.

12. The target user device according to any one of claims 8 to 11, wherein the first sidelink round-trip time positioning method is a single sided round-trip time positioning method and the second round-trip time positioning method a double-sided round-trip time positioning method.

13. The target user device according to any one of claims 8 to 12, further comprising:

- means for receiving an indication of an uncertainty of the receiver-transmitter time difference measurement; wherein the determining whether to switch from the first sidelink round-trip time positioning method to the second round-trip time positioning method is further based on the received indication of the uncertainty.

14. The target user device according to any one of claims 8 to 13, wherein the indication of the suggestion to switch comprises an indication of a clock error of the anchor user device, wherein the determining whether to switch from the first sidelink round-trip time positioning method to the second round-trip time positioning method is further based on the indication of the clock error.

15. A method comprising:

- receiving a first target sidelink positioning reference signal;

- transmitting a first anchor sidelink positioning reference signal;

- performing a receiver-transmitter time difference measurement based on the first target sidelink positioning reference signal and the first anchor sidelink positioning reference signal;

- transmitting an indication of a suggestion to switch from a first sidelink round-trip time positioning method to a second round-trip time positioning method based on the receiver-transmitter time difference measurement

Fig.1

a) single-sided SL RTT

Fig.2a

b) double-sided SL RTT

Fig.2b

300

receiving a first target sidelink positioning reference signal — 301

transmitting a first anchor sidelink positioning reference signal — 302

performing a receiver-transmitter time difference measurement based on the first target sidelink positioning reference signal and the first anchor sidelink positioning reference signal — 303

transmitting an indication of a suggestion to switch from a first sidelink round-trip time positioning method to a second round-trip time positioning method based on the receiver-transmitter time difference measurement — 304

Fig.3

400

---

| transmitting a first target sidelink positioning reference signal | 401 |

↓

| receiving a first anchor sidelink positioning reference signal | 402 |

↓

| receiving an indication of a suggestion to switch from a first sidelink round-trip time positioning method to a second round-trip time positioning method based on a receiver-transmitter time difference measurement | 403 |

↓

| determining, based on the indication of the suggestion to switch, a position of the target user device using the first round-trip time positioning method or the second round-trip time positioning method, the first round-trip time positioning method or the second round-trip time positioning method being used based on determining whether to switch from the first sidelink round-trip time positioning method to the second round-trip time positioning method | 404 |

X

Fig.4

500

502

501

UE-T

UE-A

1.1 request for SL RTT pos +

request for SL-RTT method switch asst info
(current SL-RTT method (e.g. single-sided SL-RTT),
pos accuracy req.)

1.2 SL PRS_T_1

2. measure Rx-Tx time
difference (Rx-Tx_1) between
SL PRS_A (Step 5.1) and SL
PRS_T_1 (Step 1.2)

3. determine expected clock
drift (or resulting expected
measurement error) based on
at least clock drift
characteristics, Rx-Tx time,
and/or SyncRef change, etc.

4.1 determine whether or not
double-sided SL-RTT is
needed based on at least the
estimated clock drift (or
resulting expected
measurment error), UE-T pos
accuracy requirement, current
SL RTT method;
4.2 generate SL-RTT method
switch asst info

A

B

Fig.5a

Ⓐ ─ ─ ─ ─ ─ ─ ─ ─ ─ ─ ─ ─ ─ ─ ─ ─ Ⓑ

5.1 SL PRS_A

5.2 Rx-Tx time diffrence (Rx-Tx_1) + (opt. location)

+ SL-RTT method switch asst info (doble-sided SL-RTT (not-)trigger + opt. expected clock drift)

6. determine whether to terminate RTT session as single-sided or continue further as double-sided based on at least the SL RTT method switch asst info i.e. double-sided (not-)trigger (and/or optional expect clock drift at UE-T)

7. measure Rx-Tx time difference between SL PRS_T_2 (Step 8) and SL PRS_A (Step 5.1) (if double-sided SL RTT)

8. SL PRS_T_2 (if double-sided SL RTT)

9. SL Pos measurement + (if double-sided SL RTT)

10. estimate location

Fig.5b

| Clock error / T reply | 0.2 ppm | 2 ppm | 5 ppm | 10 ppm | 20 ppm |
|---|---|---|---|---|---|
| 1ms | 0.05ns | 0.5ns | 1.25ns | 2.5ns | 5ns |
| 10ms | 0.5ns | 5ns | 12.5ns | 25ns | 25ns |
| 100ms | 5ns | 50ns | 125ns | 250ns | 250ns |
| 1s | 50ns | 500ns | 1250ns | 2500ns | 2500ns |

Fig.6

Fig.7

Europäisches
Patentamt

European
Patent Office

Office européen
des brevets

# EUROPEAN SEARCH REPORT

**Application Number**

EP 24 15 2385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/306979 A1 (CHOI CHANG-SIK [KR] ET AL) 30 September 2021 (2021-09-30) * paragraphs [0004], [0006], [0007], [0027] - [0033], [0040] - [0046] * * figures 2, 4-6 * | 1-15 | INV. G01S5/02 G01S13/76 G01S13/87 H04W64/00 |
| A | WO 2022/227030 A1 (QUALCOMM INC [US]; DAI JING [CN] ET AL.) 3 November 2022 (2022-11-03) * paragraphs [0018] - [0020], [0040], [0041], [0083] - [0092] * * figures 7-10B * | 1-15 | ADD. G01S5/00 |
| A | JIANCHI ZHU ET AL: "Discussion on potential solutions for sidelink positioning", 3GPP DRAFT; R1-2211530; TYPE DISCUSSION; FS_NR_POS_ENH2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 7 November 2022 (2022-11-07), XP052222094, Retrieved from the Internet: URL:https://www.3gpp.org/ftp/TSG_RAN/WG1_RL1/TSGR1_111/Docs/R1-2211530.zip [retrieved on 2022-11-07] * page 1 - page 3 * | 1-15 | |

| | | | TECHNICAL FIELDS SEARCHED (IPC) |
|---|---|---|---|
| | | | G01S H04W |

The present search report has been drawn up for all claims

| Place of search | Date of completion of the search | Examiner |
|---|---|---|
| The Hague | 21 June 2024 | Roxer, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2385

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | Publication date | Patent family member(s) | Publication date |
|---|---|---|---|
| US 2021306979 A1 | 30-09-2021 | BR 112022018368 A2 | 08-11-2022 |
| | | CN 115335723 A | 11-11-2022 |
| | | EP 4127769 A1 | 08-02-2023 |
| | | JP 2023519154 A | 10-05-2023 |
| | | KR 20220159376 A | 02-12-2022 |
| | | TW 202145763 A | 01-12-2021 |
| | | US 2021306979 A1 | 30-09-2021 |
| | | WO 2021194866 A1 | 30-09-2021 |
| WO 2022227030 A1 | 03-11-2022 | BR 112023021704 A2 | 26-12-2023 |
| | | CN 117204063 A | 08-12-2023 |
| | | EP 4331288 A1 | 06-03-2024 |
| | | KR 20240000496 A | 02-01-2024 |
| | | US 2024155550 A1 | 09-05-2024 |
| | | WO 2022227030 A1 | 03-11-2022 |

EPO FORM P0459

For more details about this annex : see Official Journal of the European Patent Office, No. 12/82